# EUROPEAN PATENT APPLICATION

(11) **EP 1 328 092 A1**
(43) Date of publication of application: **16.07.2003**
(21) Application number: 02360018.2
(22) Date of filing: 11.01.2002
(51) Int. Cl.: H04L 12/56

(54) **Method for treating packets of data transmitted with variable delays**

(71) Applicant: ALCATEL, 75008 Paris (FR)
(72) Inventor: Penet, Xavier, 67400 Illkirch-Graffenstaden (FR); Wilsius, Bruno, 67100 Strasbourg (DE); Grimmer, Alain, 67400 Illkirch-Graffenstaden (FR); Pinier, François, 67100 Strasbourg (FR)
(74) Representative: Rausch, Gabriele, Dr.

(57) **Abstract**

The present invention concerns a method for treating or handling, at the receiving side, packets of data transmitted with variable delays through a network using Internet Protocol.

Method characterised in that the following steps are performed at the receiving side:
- to calculate repetitively an acceptable delay range from an average value of several delays determined for several packets at their arrival time and by applying Gaussian law properties to said average value;
- to accept only packets of data which are received with a delay within said range.

## Description

The present invention concerns generally the transmission of packets of data over a network, for example using Internet Protocol (IP) based transmission, and more particularly the retrieval of said packets at the receiver side.

The present invention relates to a method for treating or handling packets of data received with variable delays and a method for receiving and regenerating VoIP (Voice over Internet Protocol) packets at a receiving terminal.

It is a matter of fact that packets of data (whichever kind of) transmitted by means of an IP based network experience variable delays during their transmission due to varying obstructions of the transmission channels depending on the traffic, clogging of the network nods or routers, use of alternative ways by the various packets,...

It is therefore obvious that a crucial problem arises when the contents of said packets have to be regenerated and exploited as quick as possible, for example in near real time, at the receiving side, in the same order than their order of sending at the transmitting side.

In order to minimise packet loss and thus loss of information, two main solutions have been proposed until now.

A first solution consists in delaying all packets at reception by a constant delay, before treating their content, and in case of VoIP packets before playing them out.

But this solution is not adaptive and therefore the quality of the restored information (for example the voice quality) can drop drastically if the delay is chosen too short. In the contrary, the set delay can also be too long, which handicaps the interactivity and does not allow to benefit from very short transmission delays.

Some attempts have been made to set the delay dynamically, but the gained improvement is not satisfactory.

A second solution consists in adding some redundancy at the transmission side to regenerate packets which have been lost at the reception side.

However, this solution implies a dependency between the transceiver and the receiver in order to use the redundancy in the same way. Furthermore, the redundancy increases the bandwidth needed and thus decreases the network and transmission efficiency.

So, the problem to be solved by the invention lies in the proposal of a solution that provides minimum packet loss in IP connections, while keeping a good interactivity and without increasing the volume of traffic.

Therefore, the invention concerns a method for treating or handling, at the receiving side, packets of data transmitted with variable delays through a network, in particular using Internet Protocol (not compulsory), characterised in that the following steps are performed at the receiving side:
- to calculate repetitively an acceptable delay range from an average value of several delays determined for several packets at their arrival time and by applying Gaussian law properties to said average value;
- to accept only packets of data which are received with a delay within said range.

As can be seen, the invention advantageously uses the results of the discovery and deductions made by the inventors that the delay of the packets conveyed in an IP network is Gaussian.

According to a preferred embodiment of the invention, said method provides for applying, at a terminal interconnected to said network and being a receiver of packets of data, the steps of:
- calculating the difference Δ between the real time stamp and the estimated time stamp for each received packet of data;
- calculating a mean value M of said difference Δ on a predetermined number of sampling intervals;
- fixing an upper bound U defined from said mean value M;
- restoring or reproducing at (estimated time stamp + U) the content of each packet received before (estimated time stamp + U);
- dropping every packet arriving with a delay over said upper bound U;
- repeating the foregoing steps during the considered transmission phase by updating cyclically said mean value M and said upper bound U.

The upper bound or limit may be preferably calculated as: U = M + n x σ, wherein σ is the standard deviation admitting, according to the invention, that the difference Δ follows a Gaussian law and n is a number greater than 1.

Advantageously, n is comprised between 1,5 and 5, and preferably equal to 2.

In order to avoid a shift of the mean value M after a certain transmission time, the method may also comprise the step of repetitively synchronising the local clock of the receiving terminal with the clock of the distant transmitting unit.

Preferably, and in particular in case of VoIP, the accepted packets of data are put in order before their content is regenerated and/or treated, the content of the missing packets being possibly replaced by interpolated values.

The invention is particularly, but not solely, adapted to be implemented in connection with VoIP applications.

Therefore, said invention also concerns a method of recovering and regenerating VoIP packets at a receiving terminal, characterised in that it consists in applying to the arriving packets of data the method as described before, and then playing the content of the received and accepted packets, the lost or dropped packets being played as a white noise or replaced by packets whose contents have been interpolated from adjacent packets.

This invention will be better understood thanks to the following description explaining a preferred embodiment of the invention as a non limitative example, in connection with the enclosed schematical drawings.

Figure 1 is a time based diagram showing an example of evolution of the delay at reception Δ of several packets of data (Voice data packet delay variation represented as stars) transmitted over an IP network connection.

Figure 2 is a graphical representation showing the Gaussian curve representing the distribution of the delay Δ of figure 1 around a mean value M.

A practical embodiment of the invention will now be described, with reference to the enclosed drawings, in connection with a VoIP implementation, as consecutive operative steps carried out in a receiving terminal.

First, the time stamp of each received packet is checked at receiving time (sampling increment).

Then, the difference Δ between the real time stamp and the estimated time stamp at each sampling interval is calculated.

The calculation can be initialised in the following way:

| | | |
|---|---|---|
| - Packet 0 | - Packet 1 | - Packet 2 |
| TSr 0 (real) | TSr 1 (real) | TSe 2 (estimated) |

where TSr x = Time Stamp real and TSe y = Time Stamp estimated.

So, we can estimate TSe n = TSr 0 + (current time (reception side) - first packet arrival time (reception side)) and then calculate: Δn = TSe n - TSr n, when packet n is received.

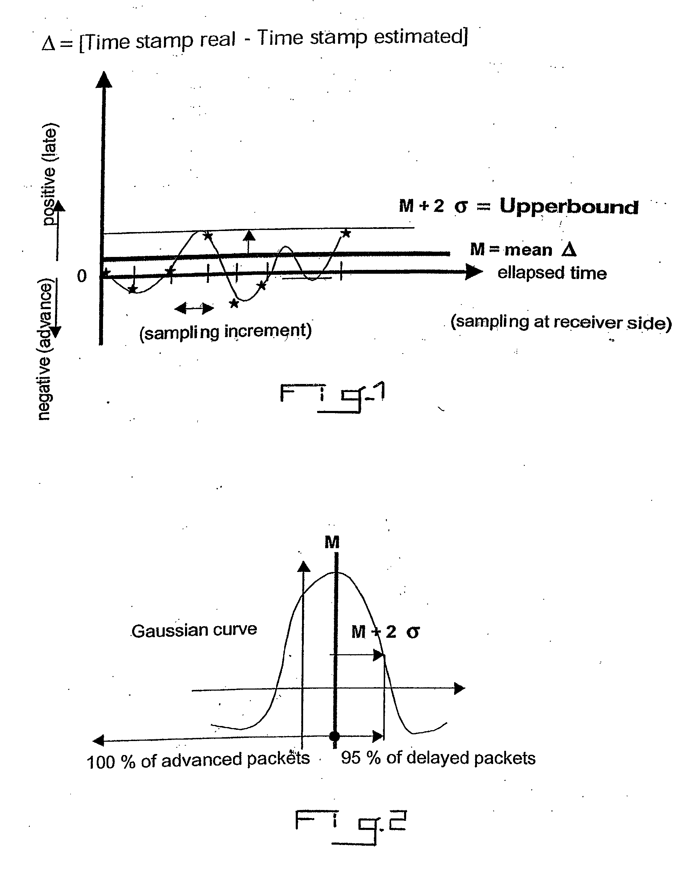

In a following step, M = mean value of Δ is calculated on a certain number of samples (see figure 1) and it has been found that the variation of M follows a Gaussian curve (see figure 2).

We take as upper bound of M: U = M + 2 σ. It could be M + n x σ but if n is too high the delay may be too long and the interactivity unnecessarily decreased.

According to Gaussian properties, n = 2 ensures that 95 % of points Δ (stars on figure 1) are within the acceptable limit and another delay (and not advance) is fixed ensuring that 100 % of early packets are included (see figure 1).

A loss of packets upper bounded by 2,5 % yields goods results. Lost packets are either interpolated or "white" are played and packets out of time range are dropped.

The mean value M is updated cyclically (mobile M) to take into account the network evolution:
- we can e.g. take between 10 and 100, preferably about 64 sampling intervals (one interval is a basic voice packet)
- the shorter the cycle is set, the faster the adaptation works.

A problem may occur because the time stamp is estimated at the receiver side with a local time (not necessarily synchronised with transmitter time). Accumulation of delay between real time stamp and estimated one leads then to a shift of the mean value M.

Therefore, a local time adjustment is necessary to keep M value around 0. But this adjustment rate can be quite slow compared to the mobile M value estimation updating rate.

Such time adjustment methods are known by the man skilled in the art.

It should be noted that the invention allows especially to remove jitter of VoIP packets at reception, ensure a good voice intelligibility (minimum packets loss), while keeping a good interactivity (minimum delay). Furthermore, it ensures a good audio quality because a majority of packets (> 97,5 %) are received and played in the right order.

It should also be noted, more generally, that the invention is fully compatible with H 323, improves the interpolation mechanisms, is completely independent of the transmitter side and avoids QoS router in small configurations.

The present invention also concerns a communication terminal, such as a communication server or an IP phone, characterised in that it comprises data packets receiving means, said means handling or treating transmitted packets according to the method described before.

The present invention is, of course, not limited to the preferred embodiments described herein and showed on the attached drawings, changes can be made or equivalents used without departing from the scope of the invention.

## Claims

1. Method for treating or handling, at the receiving side, packets of data transmitted with variable delays through a network, in particular using Internet Protocol, **characterised in that** the following steps are performed at the receiving side:
- to calculate repetitively an acceptable delay range from an average value of several delays determined for several packets at their arrival time and by applying Gaussian law properties to said average value;
- to accept only packets of data which are received with a delay within said range.

2. Method according to claim 1, **characterised in that** it mainly consists in applying, at a terminal interconnected to said network and being a receiver of said packets of data, the steps of:
- calculating the difference (Δ) between the real time stamp and the estimated time stamp for each received packet of data;
- calculating a mean value (M) of said difference (Δ) on a predetermined number of sampling intervals;
- fixing an upper bound (U) defined from said mean value (M);
- restoring or reproducing at (estimated time stamp + U) the content of each packet received before (estimated time stamp + U);
- dropping every packet arriving with a delay over said upper bound (U);
- repeating the foregoing steps during the considered transmission phase by updating cyclically said mean value (M) and said upper bound (U).

3. Method according to claim 2, **characterised in that** the upper bound value (U) is calculated as: U = M + n x σ, wherein σ is the standard deviation admitting that the difference (Δ) follows a Gaussian law and n is a number greater than 1.

4. Method according claim 3, **characterised in that** n is comprised between 1,5 and 5, and preferably equal to 2.

5. Method according to anyone of claims 2 to 4, **characterised in that** the mean value (M) is calculated on between 10 and 100 sampling intervals.

6. Method according to anyone of claims 1 to 5, **characterised in that** it also comprises the step of repetitively synchronising the local clock of the receiving terminal with the clock of the distant transmitting unit.

7. Method according to anyone of claims 1 to 6, **characterised in that** the accepted packets of data are put in order before their content is regenerated and/or treated, the content of the missing packets being possibly replaced by interpolated values.

8. Method of recovering and regenerating VoIP packets at a receiving terminal, **characterised in that** it consists in applying to the arriving packets of data the method according to anyone of claims I to 7, and then playing the content of the received and accepted packets, the lost or dropped packets being played as a white noise or replaced by packets whose contents have been interpolated from adjacent packets.

9. Communication terminal, such as a communication server or an IP phone, **characterised in that** it comprises data packets receiving means, said means handling or treating transmitted packets according to the method described in anyone of claims 1 to 8.
